# EUROPEAN PATENT APPLICATION

(11) **EP 4 503 164 A1**
(43) Date of publication of application: **05.02.2025**
(21) Application number: 22935533.4
(22) Date of filing: 31.03.2022
(51) Int. Cl.: H01M 4/13, H01M 10/052, H01M 50/434, H01M 50/443, H01M 50/46

(54) **LITHIUM-ION SECONDARY BATTERY**

(71) Applicant: Vehicle Energy Japan Inc., Ibaraki 312-8505 (JP)
(72) Inventor: TOOYAMA, Tatsuya, Hitachinaka-shi, Ibaraki 312-8505 (JP); SUZUKI, Shuichi, Hitachinaka-shi, Ibaraki 312-8505 (JP); MIKI, Takeshi, Hitachinaka-shi, Ibaraki 312-8505 (JP)
(74) Representative: Strehl Schübel-Hopf & Partner
(86) International application number: PCT/JP2022/016890
(87) International publication number: WO 2023/188395

(57) **Abstract**

A lithium-ion secondary battery having excellent adhesion between an electrode mixture layer and an electronic insulating layer provided thereon is provided. The lithium ion secondary battery includes: a positive electrode including a positive electrode current collector, a positive electrode mixture layer provided on the positive electrode current collector, and a positive electrode electronic insulating layer provided on the positive electrode mixture layer; and a negative electrode including a negative electrode current collector, a negative electrode mixture layer provided on the negative electrode current collector, and a negative electrode including a negative electrode electronic insulating layer provided on the negative electrode mixture layer. The height of recesses and projections at the interface between the positive electrode mixture layer and the positive electrode electronic insulating layer is 2 um or more. The height of recesses and projections at the interface between the negative electrode mixture layer and the negative electrode electronic insulating layer is 2 um or more.

## Description

### Technical Field

The present invention relates to a lithium-ion secondary battery.

### Background Art

In the automobile industry, a fuel efficiency regulation and an environmental regulation are strengthened. In order to comply with these regulations, a technological development of an electric vehicle that uses a battery as a power source and emits no carbon dioxide, and a fuel cell vehicle that uses hydrogen as a fuel source has attracted attention. However, the electric vehicles and the fuel cell vehicles have various problems such as insufficient infrastructure. Therefore, a PHEV (Plug-in Hybrid Electric Vehicle) and a HEV (Hybrid Electric Vehicle) which use both an internal combustion engine and a battery as power sources and emit less carbon dioxide are promising candidates for compliance with the fuel efficiency regulation and the environmental regulation.

A lithium-ion secondary battery is used in the PHEV or HEV. Patent Literature 1 describes a lithium-ion secondary battery including an electrode including an electrode foil, a mixture layer provided on a surface of the electrode foil, and an insulating layer being provided on a surface of the mixture layer, the insulating layer containing ceramic particles, in which a plurality of holes arranged on the surface of the mixture layer facing a boundary between the insulating layer and the mixture layer, the holes having a diameter of 2.5 um or more.

Patent Literature 2 describes a method for manufacturing a lithium-ion secondary battery including a ceramic separator layer instead of a conventional porous polymer separator such as a stretched film. The lithium-ion secondary battery manufactured includes a battery element including a positive electrode, a negative electrode, the ceramic separator layer disposed between the positive electrode and the negative electrode so as to be interposed therebetween, and a lithium-ion conductive nonaqueous electrolyte, and an exterior body that houses the battery element. The ceramic separator layer is formed by coating a ceramic slurry containing insulating inorganic fine particles on at least one surface of the positive electrode and the negative electrode and drying the coating.

### Citation List

### Patent Literature

[Patent Literature 1] International Publication WO2019/244401 pamphlet
[Patent Literature 2] Japanese Patent Application Laid-Open No. 2015-191710

### Summary of Invention

### Technical Problem

An electrode mixture layer expands and contracts due to charging and discharging of a lithium-ion secondary battery. The present inventors have found as a result of intensive studies that there is a possibility that the electrode mixture layer and a layer provided thereon may be peeled off due to the expansion and contraction.

Therefore, a lithium-ion secondary battery having an excellent adhesion between the electrode mixture layer and the layer provided thereon is provided.

### Solution to Problem

According to one aspect of the present invention, a lithium-ion secondary battery is provided which includes: a positive electrode including a positive electrode current collector, a positive electrode mixture layer provided on the positive electrode current collector, and a positive electrode electronic insulating layer provided on the positive electrode mixture layer; and a negative electrode including a negative electrode current collector, a negative electrode mixture layer provided on the negative electrode current collector, and a negative electrode electronic insulating layer provided on the negative electrode mixture layer, in which an height of recesses and projections at an interface between the positive electrode mixture layer and the positive electrode electronic insulating layer is 2 um or more, and an height of recesses and projections at an interface between the negative electrode mixture layer and the negative electrode electronic insulating layer of 2 um or more.

### Advantageous Effects of Invention

In the lithium-ion secondary battery of the present disclosure, the adhesion between the mixture layer and the structure provided thereon is good.

### Brief Description of Drawings

Figure 1 is an external perspective view of a lithium-ion secondary battery according to an embodiment.
Figure 2 is an exploded perspective view of the lithium-ion secondary battery according to the embodiment.
Figure 3 is an exploded perspective view of a part of a wound group.
Figure 4 is a schematic diagram of a positive electrode and a negative electrode of the lithium-ion secondary battery according to the embodiment.
Figure 5 is a schematic enlarged cross-sectional view of an interface between a positive electrode mixture layer and a positive electrode electronic insulating layer of the lithium-ion secondary battery according to the embodiment and its vicinity.
Figure 6 is an enlarged view of a portion of a die head and a back roller used for manufacturing a positive electrode.
Figure 7 is an exemplary cross-sectional SEM image of an interface between the negative electrode mixture layer and the negative electrode electronic insulating layer and the vicinity thereof.

### Description of Embodiments

Hereinafter, embodiments will be described with reference to the drawings as appropriate. In addition, in the drawings referred to in the following description, the same members or members having the same function are denoted by the same reference numerals, and repeated description thereof may be omitted. Further, dimensional ratios in the drawings may be different from actual ratios for convenience of explanation, or a part of the members may be omitted from the drawings. Furthermore, in the present application, the numerical range represented by the symbol "-" includes each of the numerical values described before and after the symbol "-" as the lower limit value and the upper limit value.

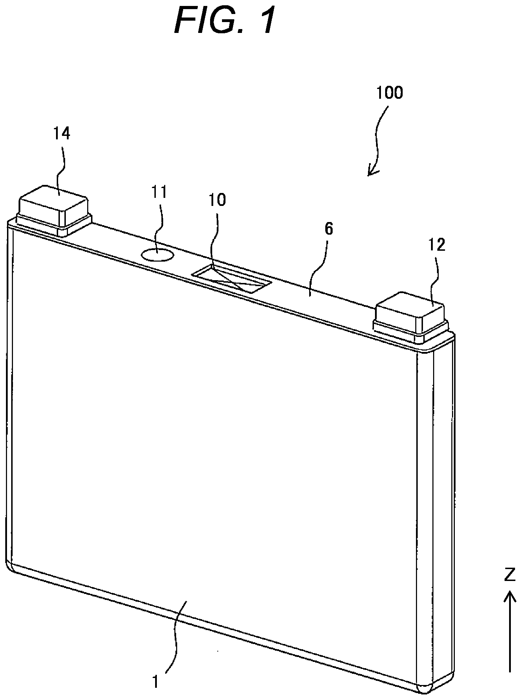

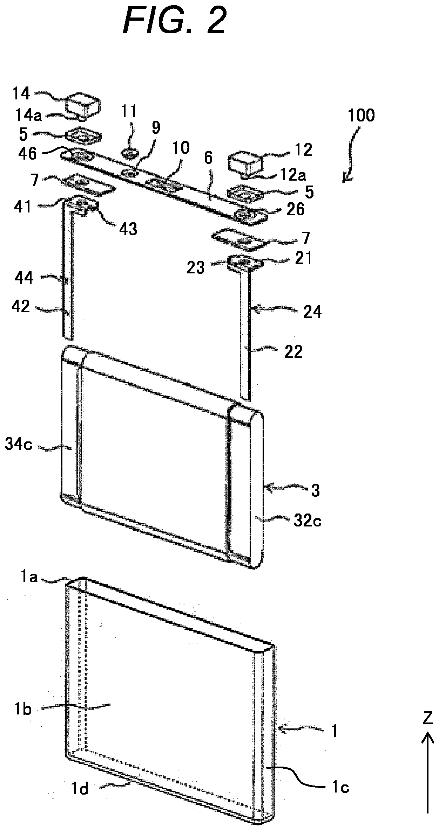

The lithium-ion secondary battery 100 according to an embodiment shown in Figures 1 and 2 includes a battery can 1 and a battery lid 6. The battery can 1 has a rectangular bottom surface 1d, a side surface including a pair of opposed wide side surfaces 1b having a relatively large area rising from the bottom surface 1d and a pair of opposed narrow side surfaces 1c having a relatively small area, and an opening 1a opened upward at an upper end of the wide side surface 1b and the narrow side surface 1c. Here, "upward" means the Z direction in Figures 1 and 2.

The opening 1a of the battery can 1 is sealed by the battery lid 6. The battery lid 6 has a substantially rectangular flat plate shape and is welded so as to close the opening 1a of the battery can 1 to seal the battery can 1.

The battery lid 6 is integrally provided with a gas discharge valve 10. When pressure in the battery can 1 increases, the gas discharge valve 10 is cleaved and the gas is emitted from the inside of the battery can 1, and the pressure in the battery can 1 decreases. This ensures the safety of the lithium-ion secondary battery 100.

A liquid injection port 9 for injecting an electrolytic solution into the battery can 1 is formed in the battery lid 6. The liquid injection port 9 is sealed by the liquid injection plug 11 after the electrolytic solution is injected into the battery can 1. The liquid injection plug 11 is joined to the battery lid 6 by a laser welding to seal the liquid injection port 9, thereby sealing the lithium-ion secondary battery 100.

Further, a positive electrode side through hole 46 and a negative electrode side through hole 26 are formed in the battery lid 6.

A positive electrode external terminal 14 and a negative electrode external terminal 12 are provided above the battery lid 6. A positive electrode current collector plate 44 and a negative electrode current collector plate 24 are provided below the battery lid 6 and inside the battery can 1.

Examples of the material for forming the positive electrode external terminal 14 and the positive electrode current collector plate 44 include an aluminum alloy, and examples of the material for forming the negative electrode external terminal 12 and the negative electrode current collector plate 24 include a copper alloy.

The positive electrode external terminal 14 and the negative electrode external terminal 12 each have a welded joint portion to which a bus bar etc. is welded. The welded joint portion has a rectangular parallelepiped block shape protruding upward from the battery lid 6. The lower surface of the welded joint portion faces the surface of the battery lid 6, and the upper surface of the welded joint is positioned at a predetermined height and is substantially parallel to the battery lid 6.

The positive electrode current collector plate 44 has a positive electrode current collector plate base 41 which has a rectangular plate shape and is opposed to the lower surface of the battery lid 6, and a positive electrode side connecting end 42 extending from the side end of the positive electrode current collector plate base 41 toward the bottom surface 1d along the wide side surface 1b of the battery can 1. Similarly, the negative electrode current collector plate 24 has a negative electrode current collector plate base 21 which has a rectangular plate shape and is opposed to the lower surface of the battery lid 6, and a negative electrode side connecting end 22 extending from the side end of the negative electrode current collector plate base 21 toward the bottom surface 1d along the wide side surface 1b of the battery can 1. A positive electrode side opening hole 43 and a negative electrode side opening hole 23 are formed in the positive electrode current collector plate base 41 and the negative electrode current collector plate base 21, respectively.

A positive electrode connecting portion 14a and a negative electrode connecting portion 12a are provided so as to protrude from the lower surfaces of the positive electrode external terminal 14 and the negative electrode external terminal 12, respectively. The positive electrode connection portion 14a and the negative electrode connection portion 12a are formed integrally with the positive electrode external terminal 14 and the negative electrode external terminal 12, respectively.

The positive electrode connecting portion 14a has a cylindrical shape that can be inserted into the positive electrode side through hole 46 of the battery lid 6 and the positive electrode side opening hole 43 of the positive electrode current collector plate base 41. Similarly, the negative electrode connecting portion 12a has a cylindrical shape that can be inserted into the negative electrode side through hole 26 of the battery lid 6 and the negative electrode side opening hole 23 of the negative electrode current collector plate base 21. The positive electrode connecting portion 14a passes through the positive electrode side through hole 46 of the battery lid 6 and the positive electrode side opening hole 43 of the positive electrode current collector plate base 41, and passes through the battery lid 6 and the positive electrode current collector plate base 41. The positive electrode external terminal 14 and the positive electrode current collector plate 44 are electrically connected to each other via the positive electrode connecting portion 14a, and are fixed to the cell lid 6. Similarly, the negative electrode connecting portion 12a passes through the negative electrode side through hole 26 of the battery lid 6 and the negative electrode side opening hole 23 of the negative electrode current collector plate base 21, and passes through the battery lid 6 and the negative electrode current collector plate base 21. The negative electrode external terminal 12 and the negative electrode current collector plate 24 are electrically connected to each other via the negative electrode connecting portion 12a, and are fixed to the cell lid 6.

The positive electrode external terminal 14 is electrically connected to a wound group 3, which will be described later, via the positive electrode connecting portion 14a and the positive electrode current collector plate 44. Similarly, the negative electrode external terminal 12 is electrically connected to the wound group 3 via the negative electrode connecting portion 12a and the negative electrode current collector plate 24. When the lithium-ion secondary battery 100 is charged, electricity is supplied from an external power source to the wound group 3 via the positive electrode external terminal 14, the positive electrode connection portion 14a, the positive electrode current collector plate 44, and the negative electrode external terminal 12, the negative electrode connection portion 12a, and the negative electrode current collector plate 24. When the lithium-ion secondary battery 100 is discharged, electricity is supplied from the wound group 3 to an external load via the positive electrode external terminal 14, the positive electrode connection portion 14a, the positive electrode current collector plate 44, and the negative electrode external terminal 12, the negative electrode connection portion 12a, and the negative electrode current collector plate 24.

In order to electrically insulate the positive electrode current collector plate 44, the negative electrode current collector plate 24, the positive electrode external terminal 14, and the negative electrode external terminal 12 from the battery lid 6, a gasket 5 is provided between each of the positive electrode external terminal 14 and the negative electrode external terminal 12 and the battery lid 6, and an insulating plate 7 is provided between each of the positive electrode current collector plate 44 and the negative electrode current collector plate 24 and the battery lid 6. Examples of a material of the insulating plate 7 and the gasket 5 include insulating resin materials such as polybutylene terephthalate, polyphenylene sulfide, and perfluoroalkoxy fluororesin.

The electrolytic solution and the wound group 3 are contained in the battery can 1.

The electrolytic solution is injected into the battery can 1 through the liquid injection port 9. As the electrolytic solution, for example, a non-aqueous electrolytic solution in which a lithium salt such as lithium hexafluoride phosphate (LiPF₆) is dissolved in a carbonate based organic solvent such as ethylene carbonate can be used.

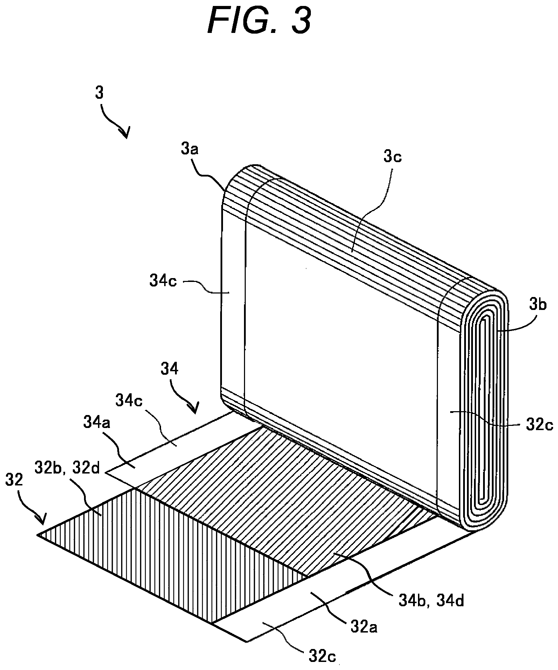

As shown in Figure 3, the wound group 3 includes a negative electrode 32 and a positive electrode 34. The negative electrode 32 and the positive electrode 34 are stacked and wound in a flat shape.

The wound group 3 has a pair of opposed end face 3a, 3b perpendicular to the winding shaft and a side face 3c between the pair of end face 3a, 3b. The side face 3c has a pair of curved portions opposed to each other having a semicircular cross section, and a flat portion continuously formed between the pair of curved portions. The wound group 3 is arranged in the battery can 1 such that the flat portion of the side face 3c and the wide side surface 1b of the battery can 1 are substantially parallel to each other.

If necessary, a shaft core may be disposed on the innermost circumference of the wound group 3. As the shaft core, a resin sheet wound with higher bending stiffness than either of the positive electrode current collector 34a and the negative electrode current collector 32a can be used, which will be described later.

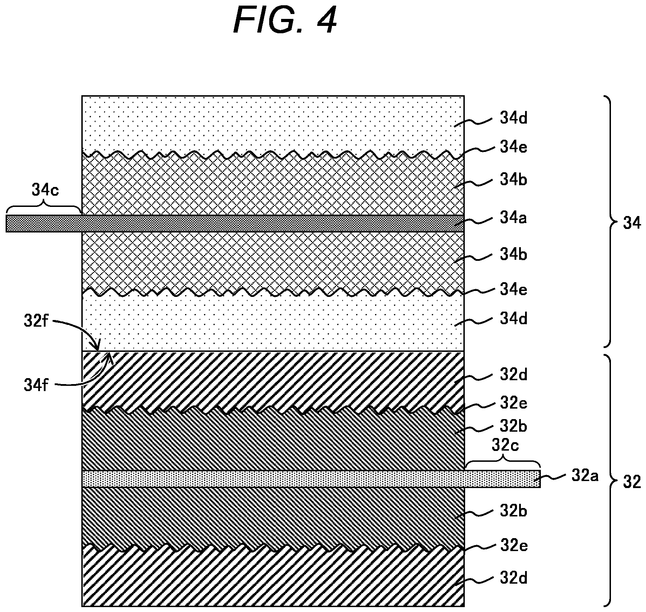

As shown in Figures 3 and 4, the positive electrode 34 includes a positive electrode current collector 34a, a positive electrode mixture layer 34b provided on the positive electrode current collector 34a, and a positive electrode electronic insulating layer 34d provided on the positive electrode mixture layer 34b. The positive electrode mixture layers 34b are provided on both surfaces of the positive electrode current collector 34a. The positive electrode electronic insulating layer 34d is provided on each of the positive electrode mixture layers 34b. The negative electrode 32 includes a negative electrode current collector 32a, a negative electrode mixture layer 32b provided on the negative electrode current collector 32a, and a negative electrode electronic insulating layer 32d provided on the negative electrode mixture layer 32b. The negative electrode mixture layers 32b are provided on both surfaces of the negative electrode current collector 32a. The negative electrode electronic insulating layer 32d is provided on each of the negative electrode mixture layers 32b. In the present application, the positive electrode current collector 34a and the negative electrode current collector 32a are collectively referred to as a current collector 34a, 32a, the positive electrode mixture layer 34b and the negative electrode mixture layer 32b are collectively referred to as an electrode mixture layer 34b, 32b, and the positive electrode electronic insulating layer 34d and the negative electrode electronic insulating layer 32d are collectively referred to as an electronic insulating layer 34d, 32d.

The current collector 34a, 32a is formed from any material that is highly conductive and does not alloy with lithium-ions. The current collector 34a, 32a may have a plate-like (sheet-like) configuration. As the positive electrode current collector 34a, for example, an aluminum foil can be used. As the negative electrode current collector 32a, for example, a copper foil can be used. One end of the positive electrode current collector 34a is provided with a portion 34c that is not covered with either the positive electrode mixture layer 34b or the positive electrode electronic insulating layer 34d (hereinafter referred to as a "positive electrode current collector exposed portion"). The positive electrode current collector exposed portion 34c is provided on the end face 3a of the wound group 3 and in the vicinity thereof. The positive electrode current collector exposed portion 34c faces and is electrically connected to the positive electrode side connecting end 42 of the positive electrode current collector plate 44. Similarly, at one end of the negative electrode current collector 32a, a portion 32c that is not covered with either the negative electrode mixture layer 32b or the negative electrode electronic insulating layer 32d (hereinafter referred to as "negative electrode current collector exposed part") is provided. The negative electrode current collector exposed portion 32c is provided on the end face 3b of the wound group 3 and in the vicinity thereof. The negative electrode current collector exposed portion 32c faces and is electrically connected to the negative electrode side connecting end 22 of the negative electrode current collector plate 24.

The positive electrode mixture 34b includes a positive electrode active material represented by the following formula (1) :

Li_{1+X}M^{A}O₂ (1)

(Where
X satisfies -0.15 ≦ X ≦ 0.15,
M^{A} represents an element group comprising at least one selected from the group consisting of Mn and Al, Ni, and Co.

When -0.15 ≦ X ≦ 0.15, the positive electrode active material has a high true density and a high reversibility.

Since M^{A} includes at least one selected from the group consisting of Mn and Al in addition to Ni and Co, the positive electrode active material has a high thermal stability and a high stability in a high potential condition. Accordingly, the lithium-ion secondary battery 100 has a high safety.

M^{A} may further include at least one selected from the group consisting of Zr, Ti, Cr, Fe, Cu, Zn, Ge, Sn, Mg, Ag, Ta, Nb, B, P, Ca, Sr and Ba. When M^{A} contains Zr, an internal resistance of the lithium-ion secondary battery 100 at low temperature is reduced. The content of Zr may be 0.1 to 2.0 mol%, in particular 0.2 to 1.0 mol%, relative to the total amount of Ni, Co, Mn and Al. In addition, the proportion of the elements other than Ni, Co, Mn and Al in all the elements constituting M^{A} may be 10 mol% or less, particularly 3 mol% or less. Accordingly, the lithium-ion secondary battery 100 can have a sufficient discharge capacity.

The amounts of the respective elements in the positive electrode active material can be measured by an ICP (Inductive Coupled Plasma) method.

The positive electrode active material may be in the form of particles. The shape of the particulate positive electrode active material (hereinafter, appropriately referred to as "positive electrode active material particles") is not particularly limited. For example, the positive electrode active material particles may have a spherical shape and have an average particle size in the range of 4.5 to 5.5 um. In the present application, the spherical shape is not limited to a perfect true sphere, and includes a substantially spherical shape such as a flat sphere shape, a long sphere shape, and a shape having a slight unevenness on a surface. The average particle size of the positive electrode active material particles can be determined by calculating an arithmetic average of the projected area circle equivalent diameters of 100 or more randomly selected positive electrode active material particles based on microscopic images of the positive electrode mixture layers 34b.

The positive electrode material mixture 34b may further include a binder. As the binder, for example, polyvinylidene fluoride (PVDF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethyl cellulose, various latexes, acrylic resins, or mixtures thereof can be used.

The positive electrode material mixture 34b may further include a conductive agent. As the conductive agent, a carbon-based material can be used. The carbon-based material may be a crystalline carbon, an amorphous carbon, or mixtures thereof. Examples of the crystalline carbon include an artificial graphite, a natural graphite (e.g., a scaly graphite), or mixtures thereof. Examples of the amorphous carbon include a carbon black (e.g., acetylene black, Ketjen black, channel black, furnace black, lamp black, thermal black, or mixtures thereof).

The negative electrode mixture layers 32b include a negative electrode active material. The negative electrode active material includes a carbon-based material capable of inserting and removing lithium ions, or is substantially made of a carbon-based material. Examples of such carbon-based materials include carbon materials such as a natural graphite, an artificial graphite, a non-graphitizable carbon (a hard carbon), an easily graphitizable carbon (a soft carbon), a graphite coated with an amorphous carbon, a mixture of carbon black as a conductive aid (e.g., acetylene black, Ketjen black, channel black, furnace black, lamp black, thermal black) and a graphite, a composite obtained by coating the mixture with amorphous carbon, a mixture of the graphite and the non-graphitizable carbon or the easily graphitizable carbon, and mixtures thereof. The negative electrode active material may be in the form of particles. The shape of the particulate negative electrode active material (hereinafter, referred to as "negative electrode active material particles" as appropriate) is not particularly limited, and may have, for example, a spherical shape, a scaly shape, a fibrous shape, or a shape obtained by pulverizing them. In particular, the negative electrode active material particles have a scaly shape (which may also be referred to as flake-like, plate-like, or flake-like shape) and may have an average particle size in the range of 9 to 11 um. The average particle size of the negative electrode active material particles can be obtained by calculating the arithmetic average of the projected area circle equivalent diameters of the 100 or more negative electrode active material particles selected at random based on the microscopic observation images of the negative electrode mixture layers 32b.

The negative electrode material mixture 32b may further include a binder. As the binder of the negative electrode mixture layer 32b, the same materials as those exemplified as those that can be used as the binder of the positive electrode mixture layer 34b can be used.

The negative electrode material mixture 32b may further contain a dispersant. As the dispersant, carboxymethylcellulose (CMC) can be used.

The electronic insulating layer 34d, 32d has a function of preventing a short circuit between the positive electrode mixture layer 34b and the negative electrode mixture layer 32b, and a function of conducting ions between the positive electrode mixture layer 34b and the negative electrode mixture layer 32b. The electronic insulating layer 34d, 32d may be a porous layer made of an electrically insulating (i.e., electronically insulating and ionically insulating) material. The porous layer can retain the electrolyte in the pores thereof, and can conduct ions between the positive electrode mixture layer 34b and the negative electrode mixture layer 32b through the electrolyte.

The porous electronic insulating layer 34d, 32d may also have a function of buffering expansion and contraction of the electrode mixture layer 34b, 32b caused by charging and discharging of the lithium-ion secondary battery 100. The expansion and contraction of the negative electrode mixture layer 32b accompanying the charging and discharging of the lithium-ion secondary battery 100 is usually larger than the expansion and contraction of the positive electrode mixture layer 34b. Therefore, the negative electrode electronic insulating layer 32d may have an average pore diameter larger than the average pore diameter of the positive electrode electronic insulating layer 34d so that the expansion and contraction of the larger negative electrode mixture layer 32b can be buffered. In the present application, the average pore diameter of the electronic insulating layer 34d, 32d means an average pore diameter on a volume basis measured by a mercury-intrusion method.

Based on the weight of the electronic insulating layer 34d, 32d, the sum of Na and Fe content of the electronic insulating layer 34d, 32d may be 300 ppm or less. The amounts of the respective elements contained in the electronic insulating layers 34d, 32d can be measured by the ICP (Inductive Coupled Plasma) method.

The positive electrode electronic insulating layer 34d may include positive electrode electronic insulating particles, and the negative electrode electronic insulating layer 32d may include negative electrode electronic insulating particles. Hereinafter, the positive electrode electronic insulating particles and the negative electrode electronic insulating particles are collectively referred to as electronic insulating particles as appropriate. The electronically insulating particles may be electrically insulating particles. Examples of electrically insulating particles include ceramic particles. The ceramic particles may contain at least one selected from the group consisting of alumina (Al₂O₃), boehmite (Al₂O₃ hydrate), magnesia (MgO), zirconia (ZrCt), titania (TiO₂), iron oxide, silica (SiO₂), and barium titanate (BaTiO₂), and preferably contain at least one selected from the group consisting of alumina, boehmite, magnesia, zirconia, and titania. The electronically insulating particles may have an average particle size in the range of 0.7 to 1.1 um. The average particle size of the electronic insulating particles can be obtained by calculating an arithmetic average of the projected area circle equivalent diameters of 100 or more electronic insulating particles selected at random based on the microscopic images of the electronic insulating layer 34d, 32d. The electronically insulating particles may contain at least one of Na of 100 to 200 ppm, Fe of 50 to 100 ppm or Ca of 50 to 100 ppm, based on the weight of the electronically insulating particles.

The electronic insulating layer 34d, 32d may further include a binder. The binder may be dispersed or dissolved in an aqueous solvent or a non-aqueous solvent (e.g., N-methyl-2-pyrrolidone (NMP)), and may contain, for example, at least one selected from the group consisting of polyvinylidene fluoride (PVDF), polytetrafluoroethylene (PTFE), polyacrylic acid (PAA), and carboxymethylcellulose (CMC).

The electronic insulating layer 34d, 32d may further include a dispersant. The dispersant may contain at least one selected from the group consisting of a carboxylic acid compound and a phosphoric acid compound. The carboxylic acid compound or the phosphoric acid compound generates an anion in the solvent, and the dispersibility of the electronic insulating particles in the solvent can be improved by electrostatic repulsion with the electronic insulating particles. In the present application, the carboxylic acid compound means a compound having at least one carboxy group or a salt thereof. In the present application, the phosphoric acid compound means a compound having at least one polar functional group represented by the formula: *-OP(=O)(OR')(OR''), wherein "*" represents a bond to another structural moiety, and R' and R'' each independently represent a hydrogen atom or a monovalent organic group.

The interface 34e between the positive electrode electronic insulating layer 34d and the positive electrode mixture layer 34b has an uneven shape, and a height of recesses and projections thereof is 2 um or more, preferably 2 to 4 um. The interface 32e between the negative electrode electronic insulating layer 32d and the negative electrode mixture layer 32b has an uneven shape, and the height of recesses and projections thereof is 2 um or more, preferably 2 to 4 um. Since the interface 34e between the positive electrode electronic insulating layer 34d and the positive electrode mixture layer 34b and the surface height of the interface 32e between the negative electrode electronic insulating layer 32d and the negative electrode mixture layer 32b are 2 um or more, the adhesion between the positive electrode electronic insulating layer 34d and the positive electrode mixture layer 34b and the adhesion between the negative electrode electronic insulating layer 32d and the negative electrode mixture layer 32b can be improved. Accordingly, the positive electrode electronic insulating layer 34d and the negative electrode electronic insulating layer 32d can be prevented from being peeled off from the positive electrode mixture layer 34b and the negative electrode mixture layer 32b, respectively, and the reliability of the lithium-ion secondary battery 100 can be improved.

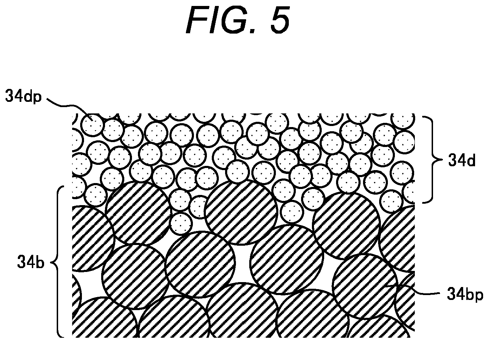

The height of recesses and projections at the interface 34e between the positive electrode mixture layer 34b and the positive electrode electronic insulating layer 34d can be controlled by, for example, the particle diameters of the positive electrode active material particles and the positive electrode electronic insulating particles. As shown in Figure 5, when the average particle size of the positive electrode active material particle 34bp is larger than the average particle size of the positive electrode electronic insulating particle 34dp, the positive electrode electronic insulating particle 34dp enters a gap between the positive electrode active material particle 34bp, and the interface 34e between the positive electrode mixture layer 34b and the positive electrode electronic insulating layer 34d becomes an uneven shape. For example, by using the spherical positive electrode active material particle 34bp having an average particle size in the range of 4.5 to 5.5 um and the positive electrode electronic insulating particle 34dp having an average particle size in the range of 0.7 to 1.1 um, the height of recesses and projections at the interface 34e between the positive electrode mixture layer 34b and the positive electrode electronic insulating layer 34d can be set to 2 um or more, preferably 2 to 4 µm.

Similarly, the height of recesses and projections at the interface 32e between the negative electrode mixture layer 32b and the negative electrode electronic insulating layer 32d can be controlled by the particle diameters of the negative electrode active material particles and the negative electrode electronic insulating particles. For example, by using scale negative electrode active material particles having an average particle size in a range of 9 to 11 um and negative electrode electronic insulating particles having an average particle size in a range of 0.7 to 1.1 um, the height of recesses and projections at the interface 32e between the negative electrode mixture layer 32b and the negative electrode electronic insulating layer 32d can be set to 2 um or more, preferably 2 to 4 µm.

In the present application, the height of recesses and projections at the interface 34e, 32e between the electronic insulating layer 34d, 32d and the electrode mixture layer 34b, 32b is measured as follows. A scanning electron microscopy (SEM) obtains cross-sectional SEM images of any three positions of the positive electrode 34 or the negative electrode 32, and measures, in each cross-sectional SEM image, a distance from any ten or more points on the interface 34e, 32e between the electronic insulating layer 34d, 32d and the electrode mixture layer 34b, 32b to a predetermined reference plane (for example, a distance from any ten or more points on the interface 34e, 32e between the electronic insulating layer 34d, 32d and the electrode mixture layer 34b, 32b to a surface 34f, 32f of the electronic insulating layer 34d, 32d, that is, a thickness of any ten or more electronic insulating layer layers). The standard-deviation of the obtained distance-value is defined as the height of recesses and projections at the interface 34e, 32e between the electronic insulating layer 34d, 32d and the electrode mixture layer 34b, 32b. Note that the surface 34f of the positive electrode electronic insulating layer 34d and the interface 32f of the negative electrode electronic insulating layer 32d are surfaces facing each other, and may be sufficiently flat as compared with the interface 34e, 32e. For example, the height of recesses and projections at the surface 34f, 32f of the electronic insulating layers 34d, 32d may be 1/10 or less of the height of recesses and projections at the interface 34e, 32e.

The phrase "the interface 34e between the positive electrode electronic insulating layer 34d and the positive electrode mixture layer 34b has an uneven shape" may be replaced with "a positive electrode mixed layer including the positive electrode active material and the electronic insulating material between the positive electrode electronic insulating layer 34d and the positive electrode mixture layer 34b." Similarly, the phrase "the interface 32e between the negative electrode electronic insulating layer 32d and the negative electrode mixture layer 32b has an uneven shape" can be referred to as "a negative electrode mixed layer including the negative electrode active material and the electronic insulating material between the negative electrode electronic insulating layer 32d and the negative electrode mixture layer 32b." The thickness of the positive electrode mixed layer is 2 um or more, preferably in the range of 2 to 4 um. The thickness of the negative electrode mixed layer is 2 um or more, preferably in the range of 2 to 4 um. The thicknesses of the positive electrode mixed layer and the negative electrode mixed layer can be measured in the same manner as the height of recesses and projections at the interface 34e, 32e between the electronic insulating layer 34d, 32d and the electrode mixture layer 34b, 32b described above.

The positive electrode electronic insulating layer 34d and the negative electrode electronic insulating layer 32d may be contacted with each other. Preferably, the positive electrode electronic insulating layer 34d and the negative electrode electronic insulating layer 32d may be contacted with each other without being fixed. Since the positive electrode electronic insulating layer 34d and the negative electrode electronic insulating layer 32d are not fixed to each other, stresses caused by expansion and contraction of the negative electrode mixture layer 32b and the positive electrode mixture layer 34b due to charging and discharging of the lithium-ion secondary battery 100 can be relaxed, and dendrites that can cause a short circuit between the positive electrode mixture layer 34b and the negative electrode mixture layer 32b can be prevented or reduced from growing through the positive electrode electronic insulating layer 34d and the negative electrode electronic insulating layer 32d.

A peel strength of the positive electrode electronic insulating layer 34d with respect to the positive electrode mixture layer 34b and the peel strength of the negative electrode electronic insulating layer 32d with respect to the negative electrode mixture layer 32b may be greater than the peel strength of the positive electrode electronic insulating layer 34d with respect to the negative electrode electronic insulating layer 32d. Peel strength can be measured, for example, in a 180° tape peel test according to JIS C 0806-3 1999.

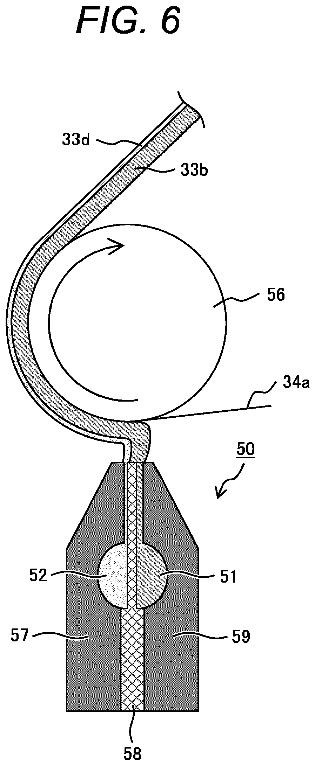

An example of a method of manufacturing the positive electrode 34 will be described. The positive electrode active material particles and optionally the conductive agent and binder are dispersed in a solvent to prepare a positive electrode mixture slurry. In addition, positive electrode electronic insulating particles, and optionally a binder and a dispersant are dispersed in a solvent to prepare a positive electrode electronic insulating material slurry. The positive electrode mixture slurry and the positive electrode electronic insulating material slurry are simultaneously coated on the positive electrode current collector. For example, the positive electrode mixture slurry and the positive electrode electronic insulating material slurry are simultaneously applied onto the positive electrode current collector 34a using a die head 50 as shown in Figure 6. The die head 50 has an outlet block 47, a three-dimensional shim 48, and an inlet block 49. Inside the die head 50, a manifold 52 for positive electrode electronic insulating material slurry and a manifold 51 for positive electrode mixture layer slurry are provided. The positive electrode mixture slurry and the positive electrode electronic insulating material slurry are simultaneously discharged from the manifolds 52 and 51 toward the positive electrode current collector 34a conveyed along the back roller 56. Thereby, the positive electrode mixture slurry layer 33b and the positive electrode electronic insulating material slurry layer 33d are formed. Next, the positive electrode mixture slurry layer 33b and the positive electrode electronic insulating material slurry layer 33d are dried by volatilizing the solvents contained in the positive electrode mixture slurry layer 33b and the positive electrode electronic insulating material slurry layer 33d in a drying oven etc. Thereby, the positive electrode mixture layer 34b and the positive electrode electronic insulating layer 34d are formed on one surface of the positive electrode current collector 34a. Similarly, the positive electrode mixture layer 34b and the positive electrode electronic insulating layer 34d are formed on the other surface of the positive electrode current collector 34a. Next, the current collector 34a, the positive electrode mixture layer 34b, and the positive electrode electronic insulating layer 34d are press-processed. Specifically, the laminate including the current collector 34a, the positive electrode mixture layer 34b, and the positive electrode electronic insulating layer 34d is sandwiched between rollers heated to 60 to 120 °C and pressed. Thereafter, the laminate is slit to a predetermined width. Thereby, the positive electrode 34 is obtained.

The negative electrode 32 can also be manufactured in the same manner as the positive electrode 34. In addition, the positive electrode 34 and the negative electrode 32 may be manufactured by a continuous process using an unwinding roller and a winding roller.

The height of recesses and projections at the interface 34e between the positive electrode mixture layer 34b and the positive electrode electronic insulating layer 34d can be controlled by the types and viscosities etc. of the solvents of the positive electrode mixture slurry and the positive electrode electronic insulating material slurry in addition to the particle diameters of the positive electrode active material particles and the positive electrode electronic insulating particles described above. Similarly, the height of recesses and projections at the interface 32e between the negative electrode mixture layer 32b and the negative electrode electronic insulating layer 32d can be controlled by the type and viscosity of the solvents of the negative electrode mixture slurry and the negative electrode electronic insulating material slurry, etc.

The average pore diameter of 34d, 32d of the electronic insulating layers can be controlled by the particle diameter of the electronic insulating particles, the press pressure in the press working, and the like. Specifically, the higher the pressing pressure, the smaller the average pore diameter, and the smaller the particle diameter of the electronic insulating particles, the smaller the average pore diameter.

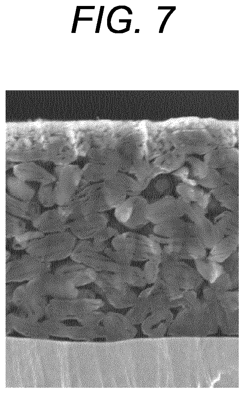

Figure 7 shows an exemplary cross-sectional SEM image of the interface 32e between the negative electrode mixture layer 32b and the negative electrode electronic insulating layer 32d and the vicinity thereof. In this embodiment, the negative electrode mixture layer 32b and the negative electrode electronic insulating layer 32d were formed by simultaneously applying the negative electrode mixture slurry and the negative electrode electronic insulating material slurry on the negative electrode current collector. By determining the standard-deviation of the thickness of the negative electrode electronic insulating layer 32d using the cross-sectional SEM image, the height of recesses and projections at the interface 32e between the negative electrode mixture layer 32b and the negative electrode electronic insulating layer 32d was determined. The height of recesses and projections at the interface 32e was 2.4 um. On the other hand, after the negative electrode mixture slurry was applied and dried on the negative electrode current collector, when the negative electrode mixture layer and the negative electrode electronic insulating layer were formed by coating and drying the negative electrode electronic insulating material slurry thereon, the height of recesses and projections at the interface between the negative electrode mixture layer and the negative electrode electronic insulating layer obtained in the same manner as described above was 0.9 µm.

The present invention is not limited to the above-described embodiments, and various design changes can be made without departing from the spirit of the present invention described in the claims. Variations encompassed by the present invention are exemplified below.

In one variation, the positive electrode electronic insulating layer 34d and the negative electrode electronic insulating layer 32d are each a layer including a solid-state electrolyte (i.e., an electronically insulating and ionically conductive material). The lithium-ion secondary battery according to this modification does not need to include an electrolytic solution, and thus can have high safety. In this modification, the electronic insulating particles included in the positive electrode electronic insulating layer 34d and the negative electrode electronic insulating layer 32d may be solid electrolyte particles. The solid electrolyte can be satisfactorily formed by press forming. Therefore, it is not essential that the positive electrode electronic insulating layer 34d and the negative electrode electronic insulating layer 32d contain a binder and a dispersant.

Examples of solid electrolytes include sulphide-based solid electrolytes, such as Li₁₀GeP₂S₁₂, Li₆PS₅Cl and Li₂S-P₂S₅ glasses, Li₂S-SiS₂ glasses, Li₂S-P₂S₅-GeS₂ glasses, Li₂S-B₂S₃ glasses, oxide solid electrolytes, such as Li₇La₃Zr₂O₁₂, LiLaTiO₃, LiTi(PO₄)₃, LiGe(PO₄)₃ and complex hydride solid electrolytes, such as LiBH₄-LiI, LiBH₄-LiNH₂, and mixtures of two or more of these.

In this modification, at least one of the electrode mixture layers 34b, 32b may further contain a solid electrolyte in addition to the electrode active material and an optional binder, a conductive agent, and a dispersant. As a result, an ionic conductivity of the electrode mixture 34b, 32b can be improved.

At least one of the positive electrode electronic insulating layer 34d and the negative electrode electronic insulating layer 32d may have a multi-layer configuration including two or more electronic insulating layers. For example, at least one of the positive electrode electronic insulating layer 34d and the negative electrode electronic insulating layer 32d may include a porous layer formed of an electrically insulating material provided on the electrode mixture layer, and a layer including a solid electrolyte provided on the porous layer. Such a multilayer structure can improve the electronic insulating property.

All publications, patents, and patent applications cited herein are hereby incorporated by reference in their entirety.

### Reference Signs List

32... negative electrode
32a... negative electrode current collector
32b... negative electrode mixture layer
32d... positive electrode electronic insulating layer
32e... interface between negative electrode mixture layer and negative electrode electronic insulating layer
34... positive electrode
34a... positive electrode current collector
34b... positive electrode mixture layer
34d... positive electrode electronic insulating layer
34e... interface between positive electrode mixture layer and positive electrode electronic insulating layer
100... lithium-ion secondary battery

## Claims

1. A lithium-ion secondary battery comprising:
a positive electrode including a positive electrode current collector, a positive electrode mixture layer provided on the positive electrode current collector, and a positive electrode electronic insulating layer provided on the positive electrode mixture layer; and
a negative electrode including a negative electrode current collector, a negative electrode mixture layer provided on the negative electrode current collector, and a negative electrode electronic insulating layer provided on the negative electrode mixture layer,
wherein a height of recesses and projections at an interface between the positive electrode mixture layer and the positive electrode electronic insulating layer is 2 um or more, and
a height of recesses and projections at an interface between the negative electrode mixture layer and the negative electrode electronic insulating layer of 2 um or more.

2. The lithium-ion secondary battery according to claim 1,
wherein the positive electrode electronic insulating layer and the negative electrode electronic insulating layer are in contact with each other.

3. The lithium-ion secondary battery according to claim 1 or 2,
wherein the positive electrode electronic insulating layer and the negative electrode electronic insulating layer are in contact with each other without being fixed.

4. The lithium-ion secondary battery according to any one of claims 1 to 3,
wherein the negative electrode electronic insulating layer has an average pore diameter larger than the average pore diameter of the positive electrode electronic insulating layer.

5. The lithium-ion secondary battery according to any one of claims 1 to 4,
wherein a sum of Na and Fe contents of the positive electrode electronic insulating layer is 300 ppm or less based on a weight of the positive electrode electronic insulating layer, and
a sum of Na and Fe contents of the negative electrode electronic insulating layer is 300 ppm or less based on a weight of the negative electrode electronic insulating layer.

6. The lithium-ion secondary battery according to any one of claims 1 to 5,
wherein the positive electrode electronic insulating layer includes positive electrode electronic insulating particles, and
the negative electrode electronic insulating layer includes negative electrode electronic insulating particles.

7. The lithium-ion secondary battery according to claim 6,
wherein the positive electrode mixture layer includes positive electrode active material particles, and
an average particle size of the positive electrode active material particles is larger than the average particle size of the positive electrode electronic insulating particles.

8. The lithium-ion secondary battery according to claim 7,
wherein the positive electrode active material particles have a spherical shape and have an average particle size in a range of 4.5 to 5.5 um.

9. The lithium-ion secondary battery according to any one of claims 6 to 8,
wherein the negative electrode mixture layer includes negative electrode active material particles, and
an average particle size of the negative electrode active material particles is larger than the average particle size of the negative electrode electronic insulating particles.

10. The lithium-ion secondary battery according to claim 9,
wherein the negative electrode active material particles have a scaly shape and have the average particle size in a range of 9 to 11 um.

11. The lithium-ion secondary battery according to any one of claims 6 to 10,
wherein the positive electrode electronic insulating particles and the negative electrode electronic insulating particles are both electrically insulating particles.

12. The lithium-ion secondary battery according to claim 11,
wherein the negative electrode electronic insulating particles are ceramic particles having an average particle size in a range of 0.7 to 1.1 um.

13. The lithium-ion secondary battery according to claim 11 or 12,
wherein the negative electrode electronic insulating particles contain at least one of Na of 100 to 200 ppm, Fe of 50 to 100 ppm, or Ca of 50 to 100 ppm based on a weight of the negative electrode electronic insulating particles.

14. The lithium-ion secondary battery according to any one of claims 1 to 10,
wherein each of the positive electrode electronic insulating layer and the negative electrode electronic insulating layer includes a solid electrolyte.

15. The lithium-ion secondary battery according to any one of claims 6 to 10,
wherein both of the positive electrode electronic insulating particles and the negative electrode electronic insulating particles are solid electrolyte particles.
